# EUROPÄISCHE PATENTSCHRIFT

(11) **EP 1 879 679 B1**
(45) Veröffentlichungstag und Bekanntmachung des Hinweises auf die Patenterteilung: **10.03.2010**
(21) Anmeldenummer: 06763128.3
(22) Anmeldetag: 12.05.2006
(51) Int. Cl.: B01D 27/10, B01D 35/147

(54) **FILTEREINRICHTUNG, INSBESONDERE ZUR FLÜSSIGKEITSFILTERUNG IN BRENNKRAFTMASCHINEN**
FILTERING SYSTEM, IN PARTICULAR FOR FILTERING LIQUIDS IN INTERNAL COMBUSTION ENGINES
DISPOSITIF FILTRANT DESTINE, EN PARTICULIER A FILTRER UN LIQUIDE DANS DES MOTEURS A COMBUSTION INTERNE

(30) Priorität: 13.05.2005 DE 202005007870 U
(43) Veröffentlichungstag der Anmeldung: 23.01.2008
(73) Patentinhaber: MANN + HUMMEL GMBH, 71638 Ludwigsburg (DE)
(72) Erfinder: EPLI, Sven, 74078 Heilbronn (DE); FRITZ, Luiz Carlos, CEP 13344-450 Indaiatube, São Paulo (BR); SCHRECKENBERGER, Dieter, 71672 Marbach (DE); PETSCHL, Thomas, 71638 Ludwigsburg (DE)
(86) Internationale Anmeldenummer: PCT/EP2006/062274
(87) Internationale Veröffentlichungsnummer: WO 2006/120244

(56) Entgegenhaltungen:
- WO-A-97/44113
- DE-A1- 10 301 360
- FR-A- 2 784 598

## Beschreibung

Die Erfindung bezieht sich auf eine Filtereinrichtung, insbesondere zur Flüssigkeitsfilterung in Brennkraftmaschinen, nach dem Oberbegriff des Anspruches 1.

Die DE 102 48 907 A1 offenbart eine Filtereinrichtung zur Flüssigkeitsfilterung in Brennkraftmaschinen, bestehend aus einem Filtergehäuse, in das ein hohlzylindrisches Filterelement eingesetzt ist, welches radial von außen nach innen zu durchströmen ist. Zwischen der Außenseite des Filterelementes und der Innenwandung des Filtergehäuses ist ein Ringraum gebildet, welcher die Rohseite des Filterelementes darstellt. Die zu reinigende Flüssigkeit wird in diesen Ringraum eingeleitet und durchströmt anschließend radial das Filterelement. Die gereinigte Flüssigkeit wird aus dem die Reinseite bildenden Innenraum des Filterelementes axial aus der Filtereinrichtung abgeführt.

Um sicherzustellen, dass ein unzulässig hoher Druckanstieg auf der Rohseite, beispielsweise als Folge eines verschmutzenden Filterelementes, nicht zu einer Zerstörung von Bauteilen in der Filtereinrichtung führt, ist zwischen der Rohseite und der Reinseite des Filterelementes ein Überströmventil angeordnet, das unter regulären Bedingungen geschlossen ist und bei einem Druckanstieg auf der Rohseite geöffnet wird. Über das geöffnete Überströmventil fließt ungereinigte Flüssigkeit unmittelbar von der Rohseite zur Reinseite, wodurch ein Druckabbau stattfindet. Nach erfolgtem Druckabbau schließt das Überströmventil selbsttätig, sodass Roh- und Reinseite wieder separiert sind.

Das Überströmventil ist in einer das Filterelement axial begrenzenden Stirnscheibe aufgenommen und umfasst ein in den Innenraum des Filterelementes einragenden Ventilkörper, der von einer Ventilfeder in die Schließstellung beaufschlagt wird. Ventilkörper und Ventilfeder bestehen beispielsweise aus Metall, wohingegen die Stirnscheibe aus Kunststoff gefertigt ist.

Die FR 2 784 598 A zeigt eine Filtereinrichtung zur Flüssigkeitsfilterung in Brennkraftmaschinen mit einem ringförmigen Filterelement, das stirnseitig von Endscheiben abgedichtet ist, wobei zur Stützung des Filterelementes ein zentrales Mittelrohr vorgesehen ist, welches Träger eines Überströmventils zwischen Roh- und Reinseite ist. Das Überströmventil besitzt einen Ventilkörper aus Kunststoff sowie ein Ventilgehäuse, das ebenfalls aus Kunststoff besteht. Das Überströmventil ist über eine Clipverbindung am Gehäuse des Filters gehalten, die dadurch realisiert ist, dass das Ventilgehäuses des Überströmventils mit einem einragenden Stutzen am Deckel des Filtergehäuses in eine Schnappverbindung zu bringen ist.

Von diesem Stand der Technik ausgehend liegt der Erfindung das Problem zugrunde, eine Filtereinrichtung, insbesondere zur Flüssigkeitsfilterung in Brennkraftmaschinen anzugeben, bei der einerseits mit einfachen Maßnahmen ein unzulässig hoher Druckanstieg auf der Rohseite des Filterelementes verhindert wird und andererseits eine gute Recyclingfähigkeit sichergestellt ist.

Dieses Problem wird erfindungsgemäß mit den Merkmalen des Anspruches 1 gelöst. Die Unteransprüche geben zweckmäßig Weiterbildungen an.

Die erfindungsgemäße Filtereinrichtung weist im Filtergehäuse ein Überströmventil mit einem Ventilkörper und einer Ventilfeder auf, wobei der Ventilkörper und zweckmäßig auch die Ventilfeder aus Kunststoff gefertigt sind. Dieses Überströmventil besteht ausschließlich aus Kunststoff-Bauteilen, die bei einer Müllverbrennung vollständig verascht werden können. Dies erleichtert die Entsorgung der Filtereinrichtung ganz erheblich, da eine mühsame und zeitaufwändige Demontage der Filtereinrichtung und insbesondere des Überströmventils nicht mehr erforderlich ist. Für den Fall, dass auch das Filtergehäuse einschießlich einem Gehäusedeckel aus Kunststoff gefertigt ist, kann die gesamte Filtereinrichtung nach Gebrauch verbrannt werden.

Ein derartiges Überströmventil kann an unterschiedlichen Positionen in der Filtereinrichtung angeordnet sein. In Frage kommt beispielsweise eine Anordnung im bodennahen Bereich des Filterelementes, benachbart zum Boden des Filtergehäuses. Beispielsweise kann das Überströmventil in einen Befestigungsstutzen einragen, der zweckmäßig einteilig mit einer das Filterelement stirnseitig begrenzenden Endscheibe ausgebildet ist. Diese Endscheibe befindet sich bevorzugt auf der Unterseite des Filterelementes, die dem Gehäuseboden zugewandt ist. Möglich ist aber auch eine Anordnung im oberen Bereich des Filterelementes benachbart zum Gehäusedeckel oder in einem Mittel- bzw. Stützrohr des Filterelements.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine bekannte Filtereinrichtung zur Flüssigkeitsfilterung in Brennkraftmaschinen, mit einem topfförmigen Filtergehäuse, einem in das Filtergehäuse eingesetzten, hohlzylindrischen Filterelement und einer zweiteiligen Deckelscheibe mit zwei über einen Strömungsstutren verbundenen Einzelscheiben,
- Fig. 2: die Filtereinrichtung gemäß Fig. 1 in einer perspektivischen Ansicht im Teilschnitt,
- Fig. 3a: eine perspektivische Ansicht auf den Stützkörper und die untere End- scheibe im Teilschnitt, mit einem Überströmventil,
- Fig. 3b: eine Ansicht auf einen ähnlichen Gegenstand wie in Fig. 13a darge- stellt, jedoch mit einem Überströmventil in einer weiteren Ausführung,

In den Figuren sind gleiche Bauteile mit gleichen Bezugszeichen versehen.

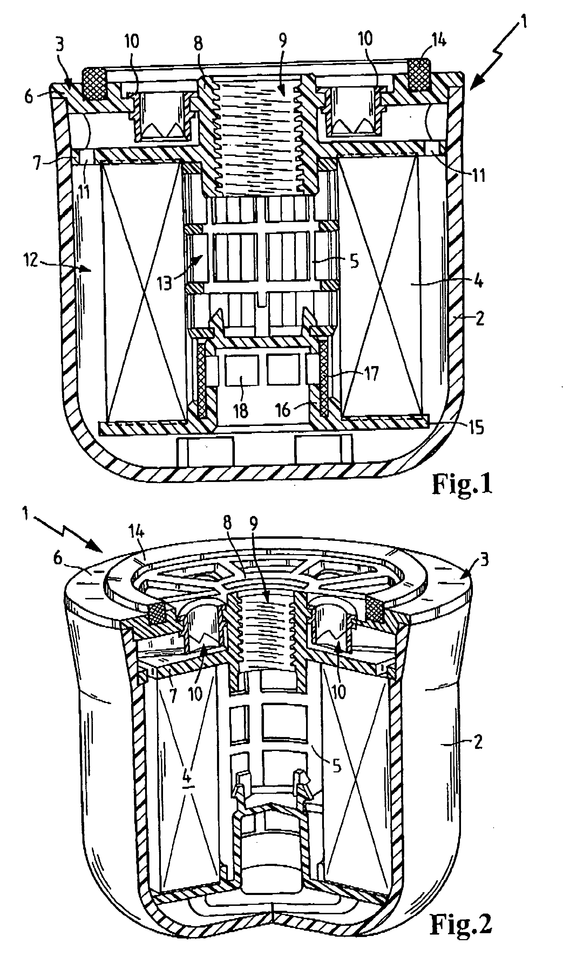

Die in den Fig. 1 und 2 dargestellte Filtereinrichtung 1 wird insbesondere in Brennkraftmaschinen zur Filterung von Flüssigkeiten wie Öl oder Kraftstoff eingesetzt. Die Filtereinrichtung 1 umfasst ein Kunststoff-Filtergehäuse 2, welches etwa topfförmig ausgebildet ist und von einer Deckelscheibe 3 zu verschließen ist. In den Aufnahmeraum im Filtergehäuse 2 ist ein Filterelement 4 eingesetzt, welches hohlzylindrisch ausgebildet ist und von einem zentralen, im Innenraum des Filterelementes 4 angeordneten Stützkörper 5 aus Kunststoff getragen ist. Das Filterelement 4 wird radial von außen nach innen durchströmt, sodass die Außenseite des Filterelementes 4 die Rohseite 12 und der Innenraum im Filterelement die Reinseite 13 bildet.

Die Deckelscheibe 3 ist vollständig aus Kunststoff hergestellt und umfasst zwei Einzelscheiben 6 und 7, die parallel zueinander liegen und näherungsweise den gleichen Radius aufweisen und über einen zentralen, hohlzylindrischen Strömungsstutzen 8 miteinander verbunden sind. Die beiden Einzelscheiben 6 und 7 sowie der Strömungsstutzen 8 bilden ein gemeinsames, einteiliges Kunststoff-Bauteil, welches beispielsweise im Spritzgießverfahren oder nach einer anderen Methode wie zum Beispiel Tiefziehen hergestellt wird. Gegebenenfalls befinden sich im Zwischenraum zwischen den beiden parallelen Einzelscheiben 6 und 7 zusätzliche Verbindungsstege, über die die beiden Einzelscheiben aneinander abgestützt sind und die die Stabilität der Deckelscheibe 3 erheblich erhöhen.

Der zentrale Stutzen 8, welcher als Bestandteil der Deckelscheibe 3 die beiden Einzelscheiben 6 und 7 miteinander verbindet, weist ein Anschluss-Innengewinde 9 auf, über das die Deckelscheibe 3 und damit auch die gesamte Filtereinrichtung 1 an ein Bauteil der Brennkraftmaschine angeschlossen werden kann. Zugleich fungiert der Strömungsstutzen 8 als Abströmöffnung,die mit der Reinseite 13 des Filterelementes 4 kommuniziert und über die die gereinigte Flüssigkeit axial aus der Filtereinrichtung 1 abgeleitet wird. Der Strömungsstutzen 8 ragt axial über die Unterseite der unteren, dem Filterelement 4 unmittelbar zugewandten Scheibe 7 über und ein Stück weit in den zylindrischen Innenraum des Filterelementes 4 - die Reinseite 13 - ein.

Die untere Einzelscheibe 7 ist zweckmäßig direkt mit der Stirnseite des Filterelementes 4 verbunden, was beispielsweise im Wege des Verschweißens oder Verklebens mit der Stirnseite des Filterelementes erreicht wird. Auf diese Weise bildet die untere Einzelscheibe 7 den stirnseitigen Abschluss des Filterelementes und sorgt einerseits für Stabilität im Filterelement und andererseits für eine Separierung von Rein- und Rohseite.

In die obere, dem Filterelement 4 abgewandte Einzelscheibe 6 sind Einströmöffnungen eingebracht, in die Rücklaufsperrventile 10 eingesetzt sind. Diese Rücklaufsperrventile 10 sind beispielsweise als Schnabelventile ausgebildet, die im Detail in den Fig. 8 und 9 dargestellt sind. Die zu reinigende Flüssigkeit wird über die Rücklaufsperrventile 10 zunächst in den Zwischenraum zwischen den beiden Einzelscheiben 6 und 7 eingeleitet, wobei die Rücklaufsperrventile 10 beim Ausbau des Filterelements über Kopf ein Auslaufen der Flüssigkeit bzw. bei abgestelltem Motor ein Leerlaufen des Filters verhindern. Aus dem Zwischenraum zwischen den Einzelscheiben 6 und 7 strömt Flüssigkeit über Durchströmöffnungen 11 in der unteren, dem Filterelement 4 unmittelbar zugewandten Einzelscheibe 7 in die Rohseite 12 ein, die als Ringspalt zwischen der Innenwandung des Filtergehäuses 2 und der Außenseite des Filterelementes 4 ausgebildet ist. Nach dem Durchströmen des Filterelementes 4 in Radialrichtung von außen nach innen wird die gereinigte Flüssigkeit im zentralen, zylindrischen Innenraum (Reinseite 13) gesammelt und axial über den Strömungsstutzen 8 der Deckelscheibe 3 abgeleitet.

Auf der Oberseite der oberen Einzelscheibe 6 der Deckelscheibe 3 ist ein Dichtring 14 in einer hierfür vorgesehenen Aufnahmenut in der Einzelscheibe 6 eingesetzt. Der Dichtring 14 sorgt für eine strömungsdichte Anbindung der Filtereinrichtung 1 an ein Bauelement der Brennkraftmaschine, an das die Filtereinrichtung angeschlossen wird.

Im unteren, dem Boden des Filtergehäuses 2 zugewandten Bereich der Filtereinrichtung ist das Filterelement 4 von einer stirnseitigen Endscheibe 15 abgedichtet. Diese Endscheibe 15, die sich auf der der Deckelscheibe 3 gegenüberliegenden Stirnseite des Filterelementes befindet, besitzt einen erhabenen, topfförmigen Befestigungsstutzen 16, der von unten in den Reinraum 13 des Filterelementes 4 einragt. Die Außenseite des sich über die Ebene der Endscheibe 15 erhebenden Befestigungsstutzens 16 ist von einem Dichtschlauch 17 umgriffen, der die Funktion eines Überströmventiles hat. In die axial sich erstreckenden Wandungen des Befestigungsstutzens 16 sind Ausnehmungen 18 eingebracht, die von dem Dichtschlauch 17 überdeckt werden und im Regelfall die Ausnehmungen 18 strömungsdicht verschließen. Falls der Druck auf der Rohseite 12 jedoch einen Grenzwert übersteigt und insbesondere höher ist als der Druck auf der Reinseite 13, strömt die gereinigte Flüssigkeit über den Boden des Filtergehäuses 2 von unten in die Ausnehmung im Befestigungsstutzen 16 und beaufschlagt über die Ausnehmungen 18 die Innenseite des Dichtschlauches 17, wodurch der Dichtschlauch radial aufgeweitet wird und die ungereinigte Flüssigkeit unmittelbar über die Ausnehmungen 18 von der Rohseite 12 zur Reinseite 13 übertreten kann. Mit nachlassendem Druck werden die Ausnehmungen 18 von der Eigenspannung im Dichtschlauch 17 wieder strömungsdicht verschlossen. Der Dichtschlauch 17 vereint in einem Bauteil die Funktionen eines Ventilkörpers und einer den Ventilkörper in Schließposition beaufschlagenden Ventilfeder.

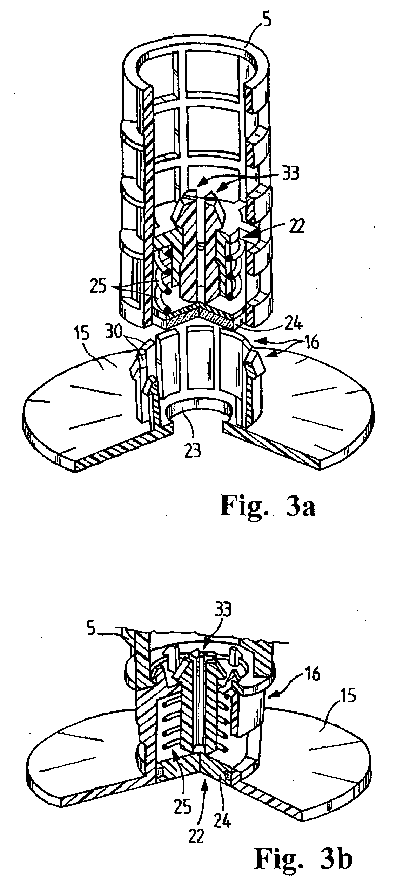

In Fig. 3a ist ein Überströmventil 22 im Bodenbereich des Filterelements dargestellt. Auch in dieser Ausführung bestehen sämtliche Bestandteile des Filterelementes aus Kunststoff. Der Ventilkörper des Überströmventils 22 wird von einer Verschlussscheibe 24 gebildet, die einteilig mit Schnapphaken 33 ausgeführt ist, welche im Innenraum des Stützkörpers 5 an einer Arretieröffnung des Stützkörpers verliersicher arretiert, jedoch axial verschieblich gehalten sind. Dadurch kann die Verschlussscheibe 24 axial zwischen einer sind. Dadurch kann die Verschlussscheibe 24 axial zwischen einer Schließposition, in der eine Überströmöffnung 23 in der bodenseitigen Endscheibe 15 strömungsdicht verschlossen ist, und einer Öffnungsstellung verschoben werden. Die Verschlussscheibe 24 wird von einer Ventilfeder 25 in ihre Schließposition kraftbeaufschlagt.

Unter regulären Bedingungen ist die Überströmöffnung 23, welche von den einzelnen Wandabschnitten 30 des Befestigungsstutzens 16 eingerahmt ist, von der Verschlussscheibe 24 strömungsdicht verschlossen. Falls der Druck auf der Rohseite einen Grenzwert übersteigt, gelangt die ungereinigte Flüssigkeit von unten über die Überströmöffnung 23 in Kontakt mit der Verschlussscheibe 24 und beaufschlagt diese mit einem öffnenden Druck entgegen der Kraft der Ventilfeder 25, wodurch die Verschlussscheibe 24 angehoben und eine Strömungsverbindung zwischen Roh- und Reinseite hergestellt wird. Mit nachlassendem Druck kann die Verschlussscheibe 24 unter der Einwirkung der Ventilfeder 25 wieder die Schließposition einnehmen, in der die Überströmöffnung 23 verschlossen ist.

Das in Fig. 3b dargestellte Überströmventil 22 entspricht in seinem Grundaufbau demjenigen aus Fig. 3a, jedoch mit dem Unterschied, dass die Ventilfeder 25 sowie die Schnapphaken 33 am Ventilkörper sich unmittelbar am Befestigungsstutzen 16 und nicht am Stützkörper 5 des Filterelements abstützen. Der Stützkörper 5 sitzt auf dem Befestigungsstutzen 16 auf, der zweckmäßig einteilig mit der Endscheibe 15 verbunden ist, gegebenenfalls aber auch ein von der Endscheibe 15 unabhängiges Bauteil bilden kann.

## Patentansprüche

1. Filtereinrichtung, insbesondere zur Flüssigkeitsfilterung in Brennkraftmaschinen, mit einem in ein Filtergehäuse (2) einsetzbaren Filterelement (4), das von der in das Filtergehäuse (2) eingeleiteten Flüssigkeit zu durchströmen ist, mit einem zentralen, im Innenraum des Filterelementes (4) angeordneten Stützkörper (5) als Träger des Filterelements (4), mit einem Überströmventil (22) zwischen der Rohseite und der Reinseite des Filterelements (4), welches in Öffnungsstellung versetzt wird, falls der Druck der Flüssigkeit auf der Rohseite des Filterelements einen Grenzwert übersteigt, wobei das Überströmventil (22) einen verstellbaren, von einer Ventilfeder (25) beaufschlagten Ventilkörper (24) umfasst, wobei der Ventilkörper (24) des Überströmventils (22) aus Kunststoff gefertigt und die Ventilfeder (25) als Schraubenfeder ausgebildet ist, die einen Abschnitt des Ventilkörpers (24) umgreift, und wobei das Überströmventil (22) über eine Schnappverbindung gehalten ist,
**dadurch gekennzeichnet,**
**dass** die Ventilfeder (25) des Überströmventils (22) aus Kunststoff gefertigt ist und dass der Ventilkörper des Überströmventils (22) von einer Verschlussscheibe (24) gebildet ist, die einteilig mit Schnapphaken (33) ausgeführt ist, welche im Innenraum des Stützkörpers (5) oder einem Befestigungsstutzen (16), auf dem der Stützkörper (5) aufsitzt, an einer Arretieröffnung verliersicher arretiert, jedoch axial verschieblich gehalten sind.

2. Filtereinrichtung nach Anspruch 1,
**dadurch gekennzeichnet,**
**dass** das Filterelement hohlzylindrisch ausgebildet ist und in Radialrichtung von der zu reinigenden Flüssigkeit durchströmt wird, wobei das Überströmventil (22) axial zumindest teilweise in den Innenraum des Filterelements einragt.

3. Filtereinrichtung nach Anspruch 1 oder 2,
**dadurch gekennzeichnet,**
**dass** das Überströmventil im bodennahen Bereich des Filterelements angeordnet ist.

4. Filtereinrichtung einem der Ansprüche 1 bis 3,
**dadurch gekennzeichnet,**
**dass** das Überströmventil in den Befestigungsstutzen (16) einragt, der mit einem Stützkörper (5) des Filterelements (4) verbunden ist.

5. Filtereinrichtung nach Anspruch 4,
**dadurch gekennzeichnet,**
**dass** der Befestigungsstutzen (16) einteilig mit einer das Filterelement stirnseitig begrenzenden Endscheibe ausgebildet ist.

6. Filtereinrichtung nach Anspruch 4,
**dadurch gekennzeichnet,**
**dass** der Befestigungsstutzen (16) separat von der das Filterelement stirnseitig begrenzenden Endscheibe ausgebildet ist.

## Claims

1. Filtering device, in particular for filtering fluids in internal combustion engines, with a filter element (4) insertable into a filter housing (2) which is to be flown through by a fluid introduced into the filter housing (2), with a supporting element (5) centrally arranged in the interior area of the filter element (4) as support of the filter element (4), with an overflow valve (22) arranged between entry side and clean side of the filter element (4) which is put into opening position if the pressure of the fluid at the entry side of the filter element exceeds a threshold value, wherein the overflow valve (22) comprises an adjustable valve body (24) subjected to strength by a valve spring (25), wherein the valve body (24) of the overflow valve (22) is made of plastic and the valve spring (25) is designed as helical spring which surrounds a section of the valve body (24), and wherein the overflow valve (22) is held by means of a snap-in connection, **characterized in that** the valve spring (25) of the overflow valve (22) is made of plastic and that the valve body of the overflow valve (22) is formed by a sealing washer (24) which is designed as one piece with snap-in hooks (33) which is fixed loss-proof, however axially displaceable manner, at a locking opening in the interior area of the supporting element (5) or at a fixing connection (16), on which the supporting element (5) is placed.

2. Filtering device according to claim 1, **characterized in that** the filter element is designed hollow cylindrical and flown through in radial direction by the fluid to be filtered, wherein the overflow valve (22) projects at least partially axially into the interior area of the filter element.

3. Filtering device according to claim 1 or 2, **characterized in that** the overflow valve is arranged near the bottom of the filter element.

4. Filtering device according to one of the claims 1 to 3, **characterized in that** the overflow valve projects into a fixing connection (16) which is connected with a supporting element (5) of the filter element (4).

5. Filtering device according to claim 4, **characterized in that** the fixing connection (16) is designed as one piece with one end plate limiting the filter element frontally.

6. Filtering device according to claim 4, **characterized in that** the fixing connection (16) is designed separately from the end plate limiting the filter element frontally.

## Revendications

1. Dispositif de filtration, en particulier pour la filtration de liquides dans des moteurs à combustion interne, avec un élément filtrant (4) insérable dans un boîtier de filtre (2) et destiné à être traversé par le liquide introduit dans le boîtier de filtre (2), avec un élément support (5) central disposé à l'intérieur de l'élément filtrant (4) en tant qu'élément porteur de l'élément filtrant (4), avec une soupape de décharge (22) placée entre le côté non filtré et le côté filtré de l'élément filtrant (4) qui est amenée en position d'ouverture lorsque la pression du liquide du côté non filtré de l'élément filtrant dépasse une valeur limite, la soupape de décharge (22) comprenant un corps de soupape (24) réglable alimenté par un ressort de soupape (25), le corps de soupape (24) de la soupape de décharge (22) étant réalisé en plastique et le ressort de soupape (25) étant conçu comme ressort hélicoïdal qui encercle une partie du corps de soupape (24), et la soupape de décharge (22) étant maintenue par un raccord encliquetable,
**caractérisé en ce que**
le ressort de soupape (25) de la soupape de décharge (22) est réalisé en plastique et que corps de soupape (24) de la soupape de décharge (22) est fait d'une plaque de fermeture (24) qui est réalisée en un bloc avec des crochets à encliquetage (33) et qui est fixée avec sécurité au niveau d'un orifice de fixation, à l'intérieur de l'élément support (5) ou d'un raccord de fixation (16) sur lequel repose l'élément support (5), mais qui peut être déplacée en sens axial.

2. Dispositif de filtration selon la revendication 1, **caractérisé en ce que** l'élément filtrant est réalisé sous forme de cylindre creux et est traversé en sens radial par le liquide à nettoyer, la soupape de décharge (22) pénétrant en sens axial, tout au moins partiellement, dans la partie intérieure de l'élément filtrant.

3. Dispositif de filtration selon la revendication 1 ou 2, **caractérisé en ce que** la soupape de décharge est disposée dans la zone proche du sol de l'élément filtrant.

4. Dispositif de filtration selon l'une des revendications 1 à 3, **caractérisé en ce que** la soupape de décharge pénètre dans le raccord de fixation (16) qui est relié à un élément support (5) de l'élément filtrant (4).

5. Dispositif de filtration selon la revendication 4, **caractérisé en ce que** le raccord de fixation (16) est réalisé en un bloc avec la plaque d'extrémité limitant l'élément filtrant au niveau frontal.

6. Dispositif de filtration selon la revendication 4, **caractérisé en ce que** le raccord de fixation (16) est réalisé de manière séparée de la plaque d'extrémité limitant l'élément filtrant au niveau frontal.
